# EUROPEAN PATENT SPECIFICATION

(11) **EP 3 510 464 B1**
(45) Date of publication and mention of the grant of the patent: **22.09.2021**
(21) Application number: 17777403.1
(22) Date of filing: 02.06.2017
(51) Int. Cl.: G05D 23/13, G05D 23/02, B29L 31/00, B29C 65/00, F03G 7/06, B29C 65/56

(54) **A THERMO-ACTUATOR AND SEALING ELEMENT ASSEMBLY METHOD**
THERMOAKTUATOR UND VERFAHREN ZUR MONTAGE EINES DICHTUNGSELEMENTS
ACTIONNEUR THERMIQUE ET PROCÉDÉ D'ASSEMBLAGE D'ÉLÉMENT D'ÉTANCHÉITÉ

(30) Priority: 08.09.2016 TR 201612859
(43) Date of publication of application: 17.07.2019
(73) Proprietor: KIRPART OTOMOTIV PARÇALARI SANAYI VE TICARET A.S., 16110 Bursa (TR)
(72) Inventor: UNLUASLAN, Faruk, Nilufer/Bursa (TR)
(74) Representative: Demirkiran, Hasan
(86) International application number: PCT/TR2017/050238
(87) International publication number: WO 2018/048370

(56) References cited:
- EP-A2- 2 372 124
- WO-A1-2012/087252
- US-A1- 2008 135 633
- US-A1- 2015 316 165

## Description

### TECHNICAL FIELD

The invention relates to the assembly method of the sealing elements of thermo-actuators used in cooling circulation circuits of internal combustion engines, and a thermo-actuator obtained by means of said method.

### PRIOR ART

In the present art, in order to fix the sealing gasket, a gasket channel is formed on the valves of thermo-actuators by means of a sheet press process, and after the sealing element is placed to said channel, the channels are partially closed by means of an additional process or the sealing element is compressed inside the gasket channel in a manner preventing removal of the sealing elements. In the inventions US5603585 and US669872082, this method is described. In this method, since the surface of the contact of the sealing element to the valve housing is narrow, the sealing element is poor at compensating the planarity errors on the sealing surfaces.

Another frequently used method is to coat the surfaces, where the valve, made of sheet or plastic material, will contact the valve seating surface, with elastomer material by means of over-molding method. Elastomer coating on the valve by means of over-molding process is an expensive process and at the same time, it is not reliable since the chemicals existing in the cooling liquids, put into the engine, lead to separation of the elastomer material from the valve.

In US2015316165 (A1); a thermoelement and a thermovalve are disclosed. Said a thermoelement and a thermovalve incorporating the same, in which reliable operation is achieved with a simple internal structure, and there is no risk of contaminant jamming. The thermoelement includes a casing, a mounting portion, a shaft, a heat-sensitive medium, and a seal member for drawing the shaft into the casing when the heat-sensitive medium expands. The thermovalve includes a body including a valve body linked to a shaft of a thermoelement, and a seating part on/from which the valve body can be seated/separated.

In US2008135633A1; thermostat valve arrangement are disclosed. Thermostat valve arrangement for the cooling circuit of an internal combustion engine in which a main valve member of a main valve is movably mounted in a housing which may be pressed against a main valve seat by a spring, in which a bypass valve member of a bypass valve is further provided which co-operates with a bypass valve seat in the housing and in which a first section of an expansion element (DWE) co-operates with an abutment fixed to the housing and a second section co-operates with the main valve member and the bypass valve member such that the main valve or bypass valve is selectively closed and/or opened, in order to produce the cooling circuit of the internal combustion engine by means of a radiator or a bypass, the main valve seat being formed by a conical seat surface in the housing,; the main valve member forming a valve unit with an axially spaced piston-shaped bypass valve member, which valve unit receives the expansion element in an axial recess in one direction in an axially secure manner, whilst the other end of the expansion element is supported by an abutment of the housing, the valve unit is displaceably and axially guided in a guide component which, in turn, is axially supported in the housing, a valve spring operating between the valve unit and the guide component, which valve spring biases the unit in the direction of the main valve seat and the valve unit and the guide component comprising co-operating stops, by means of which the movement of the parts away from each other is limited and the piston-shaped bypass valve member co-operates with a hollow cylindrical section of the guide component.

As a result, because of all of the abovementioned problems, an improvement is required in the related technical field.

### BRIEF DESCRIPTION OF THE INVENTION

The present invention relates to an assembly method of sealing elements of thermo-actuators and a thermo-actuator obtained by means of this method, for eliminating the above mentioned disadvantages and for bringing new advantages to the related technical field.

The main object of the present invention is to provide a thermo-actuator of which the sealing is increased.

Another object of the present invention is to provide a thermo-actuator where the usage lifetime of the sealing element is increased.

In order to realize all of the abovementioned objects and the objects which are to be deducted from the detailed description below, the present invention is a thermo-actuator in order to be used for controlling coolant flow through at least one valve seat in a thermostat housing placed in cooling circulation circuits of internal combustion engines and it comprises
- a cylindrical body (11) that includes a stepped diameter (12) structure embodied in protrusion form at the continuation of mentioned cylindrical body (11), wherein mentioned stepped diameter (12) structure consists of a side surface (121), a lower surface (122) and a connection part (123) connecting mentioned side surface (121) and lower surface (122) at a corner,
- a valve (30) that is in annular form and fixed onto said cylindrical body (11) in a manner at least partially encircling the body (11),
- a ring-shaped gasket (20) that is positioned between mentioned valve (30) and said stepped diameter (12) as providing sealing,
mentioned ring-shaped gasket (20) comprises
- a lower lip (23) stopped onto mentioned lower surface (122),
- an upper lip (21) extending throughout mentioned side surface (121),
- a contact knuckle (22) extending between mentioned lower lip (23) and the upper lip (21) by encircling the outer surface od mentioned connection part (123),
and wherein said ring-shaped gasket (20) has a stage-like stepped form appropriate to the form of stepped diameter (12) structure, between said upper lip (21) and lower lip (23) thanks to that the diameter of the upper lip (21) is greater than the diameter of the lower lip (23),
and further said valve (30) has a stage-like stepped form appropriate to the form of the ring-shaped gasket (20) and comprises
- a holder part (31) that is fixed onto the cylindrical body (11) in a shrink-fit manner in a manner tightening, extends downwards in a manner encircling the body (11) in the longitudinal direction and has a contact surface (32) positioned in a manner at least partially encircling the body (11)
- a press part (33) that compresses a seating surface (231), provided on the lower lip (23), by means of exerting pressure towards said lower surface (122),
- a grabbing part (34) that compresses the contact knuckle (22) by means of exerting pressure towards mentioned connection part (123),
- a stop part (35) that compresses the upper lip (21) by means of exerting pressure towards said side surface (121)
and wherein the valve (30) crushes the ring-shaped gasket (20) between the valve (30) and said stepped diameter (12) for improving sealing between them

In order to realize all of the abovementioned objects and the objects which are to be deducted from the detailed description below, the present invention is the production method of the abovementioned thermo-actuator. Accordingly, said invention comprises the following steps:
**(a)** Placing the gasket to the body such that a lower lip provided on the gasket is stopped onto a lower surface of the stepped diameter; an upper lip provided on the gasket extends towards a side surface of the stepped diameter; and a contact knuckle, extending between the lower lip and the upper lip, is stopped onto a connection part,
**(b)** Fixing a valve in a shrink-fit manner onto the body in a manner crushing and compressing the gasket between the valve and the stepped diameter.

In a preferred embodiment of the present invention, in step (b), said valve is fixed in a shrink-fit manner in a manner at least partially encircling the body through a contact surface embodied on said valve.

In another preferred embodiment of the present invention, in step (b), a press part provided on said valve compresses the lower lip by means of exerting pressure towards the lower surface.

In a preferred embodiment of the present invention, in step (b), a grabbing part provided on said valve compresses the contact knuckle by means of exerting pressure towards the connection part.

In another preferred embodiment of the present invention, in step (b), a stop part provided on said valve compresses a stop surface, provided on the upper lip, by means of exerting pressure towards the side surface.

### BRIEF DESCRIPTION OF THE FIGURES

Figure 1 is an exploded representative general view of the thermo-actuator.
Figure 2 is a representative general view of the thermo-actuator.

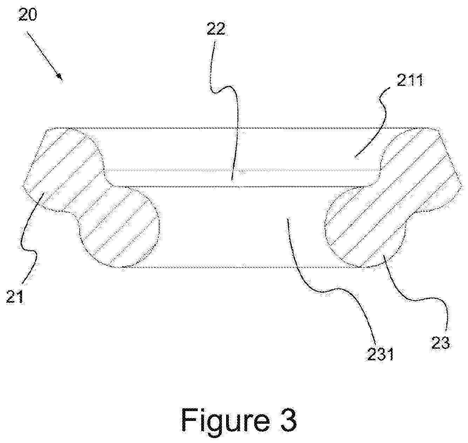

Figure 3 is a representative general view of the gasket cross section.

### REFERENCE NUMBERS

10 Thermo-actuator
11 Body
12 Stepped diameter
   121 Side surface
   122 Lower surface
   123 Contact part
13 Cover
14 Thin shaft
20 Gasket
21 Upper lip
   211 Stop surface
22 Contact knuckle
23 Lower lip
   231 Seating surface
24 First shaft hole
30 Valve
31 Holder part
32 Contact surface
33 Press part
34 Grabbing part
35 Stop part
36 Second shaft opening

### DETAILED DESCRIPTION OF THE INVENTION

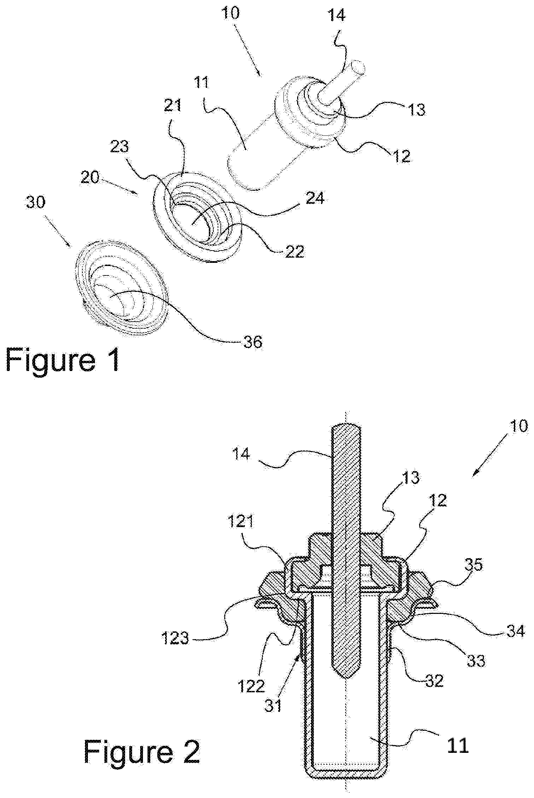

With reference to Figure 1, a valve (30) is positioned on said thermo-actuator (10), and a gasket (20) is positioned between said valve (30) and said thermo-actuator (10) in order to provide sealing. The thermo-actuator (10) in general has a cylindrical structure and comprises a body (11), a stepped diameter (12) embodied in protrusion form at the continuation of said body (11); a cover (13) embodied in a stepped manner and in an at least partially narrower diameter when compared with the stepped diameter (12) at the continuation of said stepped diameter (12); and a thin shaft (14) extending outwardly through the body (11) in a manner passing through the hole provided at the inner part of said cover (13). The stepped diameter (12) is positioned in a manner encircling the cover (13) and it is the continuation of the body (11), in order to form housing to the cover (13) at the continuation of the body (11) and in order to restrain the cover (13) inside this housing. There is a lower surface (122) on the side of the stepped diameter (12) facing the body (11), and there is a side surface (121) from the side facing outwardly, and there is a contact part (123) extending in a curved manner between the lower surface (122) and the side surface (121).

Said gasket (20) is made of an elastomer material. The gasket (20) comprises an upper lip (21); a lower lip (23); and a contact knuckle (22) positioned between said upper lip (21) and said lower lip (23). The lower lip (23) and the upper lip (21) are embodied in a stage-like stepped structure with respect to each other. The gasket (20) has an annular structure. The gasket (20) comprises a first shaft hole (24) encircled by the lower lip (23), the contact knuckle (22) and the upper lip (21). The upper lip (21) comprises a stop surface (211) at the part contacting the side surface (121) of the stepped diameter (12). The lower lip (23) comprises a seating surface (231) at the part contacting the lower surface (122) of the flange (12).

Said valve (30) is embodied in stage-like stepped annular form. The valve (30) is preferably made of a metal including material. There is a holder part (31) extending in a manner encircling the body (11) longitudinally on the valve (30), and there is a contact surface (32) defined on the inner surface of said holder part (31) facing the body (11) side. There is a press part (33) embodied at the continuation of the holder part (31) in a manner making a specific angle to the holder part (31). The press part (33) compresses the lower lip (23) of the gasket (20) by means of exerting pressure towards the lower surface (122) of the stepped diameter (12) on the thermo-actuator (10). At the continuation of the press part (33), there is a grabbing part (34) embodied in a manner making a specific angle with the press part (33). The grabbing part (34) compresses the contact knuckle (22) of the gasket (20) on the thermo-actuator (10) by means of exerting pressure towards the contact part (123). At the continuation of the grabbing part (34), there is a stop part (35) embodied in a manner making a specific angle to the grabbing part (34). At least the upper lip (21) of the gasket (20) is seated onto the stop part (35). Thus, the upper lip (21) is prevented from being compressed by the valve (30) and from spreading outwardly and/or downwardly, and the upper lip (21) grabs the side surface (121) of the stepped diameter (12). There is a second shaft opening (36) encircled by the contact surface (32) defined in the middle part of the valve (30).

In order to provide placement of gasket (20) on the thermo-actuators (10), used in cooling circulation circuits of internal combustion engines, for providing sealing, and in order to provide fixation of the position of the gasket (20), the following steps are applied respectively for placement of the valve (30).

### a) Placing the gasket (20) on the thermo-actuator (10)

The body (11) is passed through the first shaft hole (24) provided on the gasket (20), and the gasket is placed onto the thermo-actuator (10) in a manner resisting the stepped diameter (12). When the placement is completed, the upper lip (21) encircles the side surface (121) of the stepped diameter (12), and the lower lip (23) encircles the lower surface (122) of the stepped diameter (12), and thus, the stepped diameter (12) is seated into the stepped structure of the gasket (20).

### b) Placing the valve (30) on the thermo-actuator (10)

The valve (30) is placed behind the gasket (20) on the thermo-actuator (10) in a manner compressing and crushing the gasket (20) between the stepped diameter (12) and the valve (30). The body (11) is passed through the second shaft opening (36) of the valve (30) and is placed onto the thermo-actuator (10). The valve (30) is hammered to the body (11) diameter of the thermo-actuator (10) with shrink-fit tolerance, and the valve (30) is placed at the correct position on the body (11) diameter. By means of this, the gasket (20) is tightened and fixed between the valve (30) and the stepped diameter (12) of the thermo-actuator (10), and the upper lip (21) profile obtains sealing characteristic.

As the valve (30) compresses the gasket (20), the whole of the stop surface (211) contacts the side surface (211) provided on the stepped diameter (12). In a similar manner, while the press part (33) pushes the lower lip (23) towards the lower surface (122) of the flange (12), the grabbing part (34) pushes and compresses the contact knuckle (22) towards the stepped diameter (12). By means of this, the whole of the seating surface (231) contacts the lower surface (122), and at the same time, the whole of the surfaces of the gasket (20) facing the thermo-actuator (10) tightly encircles the stepped diameter (12) such that there is no gap in between. By means of placement of the valve (30) to the thermo-actuator (10) in a shrink-fit manner, the back-sliding of the valve (30) as a result of any pressure is prevented. Moreover, by means of the axial position of the valve (30) after tight hammering, both radial compression and axial compression are provided. Thus, in the regions where the gasket (20) contacts the stepped diameter (12) and the valve (3), exposure to contaminants is prevented, and bending of the gasket (20) towards one side in an unsupported manner is prevented. Thus, the usage lifetime of the gasket (20) is increased and thereby, the usage lifetime of the thermo-actuator (10) with sealed structure is also increased.

## Claims

1. A thermo-actuator (10) in order to be used for controlling coolant flow through at least one valve seat in a thermostat housing placed in cooling circulation circuits of internal combustion engines and comprising
- a cylindrical body (11) that includes a stepped diameter (12) structure embodied in protrusion form at the continuation of mentioned cylindrical body (11), wherein mentioned stepped diameter (12) structure consists of a side surface (121), a lower surface (122) and a connection part (123) connecting mentioned side surface (121) and lower surface (122) at a corner,
- a valve (30) that is in annular form and fixed onto said cylindrical body (11) in a manner at least partially encircling the body (11),
- a ring-shaped gasket (20) that is positioned between mentioned valve (30) and said stepped diameter (12) as providing sealing, **characterized in that**
mentioned ring-shaped gasket (20) comprises
- a lower lip (23) stopped onto mentioned lower surface (122),
- an upper lip (21) extending throughout mentioned side surface (121),
- a contact knuckle (22) extending between mentioned lower lip (23) and the upper lip (21) by encircling the outer surface of mentioned connection part (123),
and wherein said ring-shaped gasket (20) has a stage-like stepped form appropriate to the form of stepped diameter (12) structure, between said upper lip (21) and lower lip (23) thanks to that the diameter of the upper lip (21) is greater than the diameter of the lower lip (23),
and further said valve (30) has a stage-like stepped form appropriate to the form of the ring-shaped gasket (20) and comprises
- a holder part (31) that is fixed onto the cylindrical body (11) in a shrink-fit manner in a manner tightening, extends downwards in a manner encircling the body (11) in the longitudinal direction and has a contact surface (32) positioned in a manner at least partially encircling the body (11)
- a press part (33) that compresses a seating surface (231), provided on the lower lip (23), by means of exerting pressure towards said lower surface (122),
- a grabbing part (34) that compresses the contact knuckle (22) by means of exerting pressure towards mentioned connection part (123),
- a stop part (35) that compresses the upper lip (21) by means of exerting pressure towards said side surface (121)
and wherein the valve (30) crushes the ring-shaped gasket (20) between the valve (30) and said stepped diameter (12) in order to improve sealing between them.

2. The assembly method of the gasket (20) for providing sealing to a thermo-actuator (10) according to Claim 1, **characterized by** comprising the steps of:
(a) Placing the gasket (20) to the body (10) such that a lower lip (23) provided on the gasket (20) is stopped onto a lower surface (122) of the stepped diameter (12); an upper lip (21) provided on the gasket (20) extends towards a side surface (121) of the stepped diameter (12); and a contact knuckle (22), extending between the lower lip (23) and the upper lip (21), is stopped onto a connection part (123),
(b) Fixing a valve (30) in a shrink-fit manner onto the body (11) in a manner crushing and compressing the gasket (20) between the valve (30) and the stepped diameter (12).

3. A gasket (20) assembly method for providing sealing to a thermo-actuator (10) according to Claim 2, **characterized in that** in step (b), said valve (30) is fixed in a shrink-fit manner in a manner at least partially encircling the body (11) through a contact surface (32) embodied on said valve (30).

4. A gasket (20) assembly method for providing sealing to a thermo-actuator (10) according to Claim 2, **characterized in that** in step (b), a press part (33) provided on said valve (30) compresses the lower lip (23) by means of exerting pressure towards the lower surface (122).

5. A gasket (20) assembly method for providing sealing to a thermo-actuator (10) according to Claim 2, **characterized in that** in step (b), a grabbing part (34) provided on said valve (30) compresses the contact knuckle (22) by means of exerting pressure towards the connection part (123).

6. A gasket (20) assembly method for providing sealing to a thermo-actuator (10) according to Claim 2, **characterized in that** in step (b), a stop part (35) provided on said valve (30) compresses a stop surface (211), provided on the upper lip (21), by means of exerting pressure towards the side surface (121).

## Patentansprüche

1. Thermobetätigungsvorrichtung (10) zur Verwendung für die Steuerung des Kühlmittelflusses durch mindestens einen Ventilsitz in einem Thermostatgehäuse, das in Kühlkreisläufen von Verbrennungsmotoren angeordnet ist, und umfassend
- einen zylindrischen Körper (11), der eine Struktur mit abgestuftem Durchmesser (12) enthält, die in Form eines Vorsprungs an der Fortsetzung des genannten zylindrischen Körpers (11) ausgeführt ist, wobei die genannte Struktur mit abgestuftem Durchmesser (12) aus einer Seitenfläche (121), einer unteren Fläche (122) und einem Verbindungsteil (123) besteht, das die genannte Seitenfläche (121) und die untere Fläche (122) an einer Ecke verbindet,
- ein Ventil (30), das ringförmig ist und an dem zylindrischen Körper (11) so befestigt ist, dass es den Körper (11) zumindest teilweise umgibt,
- eine ringförmige Dichtung (20), die zwischen dem genannten Ventil (30) und dem genannten abgestuften Durchmesser (12) angeordnet ist, um eine Abdichtung zu gewährleisten, **dadurch gekennzeichnet, dass**
die genannte ringförmige Dichtung (20)
- eine untere Lippe (23), die auf der genannten unteren Fläche (122) aufliegt,
- eine obere Lippe (21), die sich über die genannte Seitenfläche (121) erstreckt,
- einen Kontaktknöchel (22), das sich zwischen der genannten unteren Lippe (23) und der oberen Lippe (21) erstreckt, indem es die Außenfläche des genannten Verbindungsteils (123) umgibt, umfasst,
und wobei die ringförmige Dichtung (20) zwischen der oberen Lippe (21) und der unteren Lippe (23) eine stufenförmige, abgestufte Form aufweist, die der Form der Struktur des abgestuften Durchmessers (12) entspricht, da der Durchmesser der oberen Lippe (21) größer ist als der Durchmesser der unteren Lippe (23),
und ferner das Ventil (30) eine stufenförmige, abgestufte Form aufweist, die der Form der ringförmigen Dichtung (20) entspricht, und
- ein Halteteil (31), das auf dem zylindrischen Körper (11) schrumpfend und festziehend befestigt ist, sich in Längsrichtung um den Körper (11) herum nach unten erstreckt und eine Kontaktfläche (32) aufweist, die so angeordnet ist, dass sie den Körper (11) zumindest teilweise umgibt,
- ein Pressteil (33), das eine an der unteren Lippe (23) vorgesehene Sitzfläche (231) durch Ausüben von Druck auf die untere Fläche (122) zusammendrückt,
- ein Greifteil (34), das den Kontaktknöchel (22) durch Ausüben von Druck auf das genannte Verbindungsteils (123) zusammendrückt,
- einen Anschlagteil (35), der die obere Lippe (21) durch Ausüben von Druck auf die genannte Seitenfläche (121) zusammendrückt, umfasst,
und wobei das Ventil (30) die ringförmige Dichtung (20) zwischen dem Ventil (30) und dem gestuften Durchmesser (12) quetscht, um die Abdichtung zwischen ihnen zu verbessern.

2. Montageverfahren für die Dichtung (20) zur Abdichtung einer Thermobetätigungsvorrichtung (10) nach Anspruch 1, **dadurch gekennzeichnet, dass** es die folgenden Schritte umfasst:
(a) Anbringen der Dichtung (20) an dem Körper (10) derart, dass eine untere Lippe (23), die an der Dichtung (20) vorgesehen ist, an einer unteren Fläche (122) des abgestuften Durchmessers (12) anliegt; eine obere Lippe (21), die an der Dichtung (20) vorgesehen ist, sich in Richtung einer Seitenfläche (121) des abgestuften Durchmessers (12) erstreckt; und ein Kontaktknöchel (22), der sich zwischen der unteren Lippe (23) und der oberen Lippe (21) erstreckt, an einem Verbindungsteil (123) anliegt,
(b) Befestigen eines Ventils (30) in Schrumpfpassung auf dem Körper (11) durch Quetschen und Zusammendrücken der Dichtung (20) zwischen dem Ventil (30) und dem abgestuften Durchmesser (12).

3. Verfahren zur Montage einer Dichtung (20) zur Abdichtung einer Thermobetätigungsvorrichtung (10) nach Anspruch 2, **dadurch gekennzeichnet, dass** in Schritt (b) das Ventil (30) in Schrumpfpassung so befestigt wird, dass es den Körper (11) über eine auf dem Ventil (30) ausgebildete Kontaktfläche (32) zumindest teilweise umgibt.

4. Verfahren zur Montage einer Dichtung (20) zur Abdichtung einer Thermobetätigungsvorrichtung (10) nach Anspruch 2, **dadurch gekennzeichnet, dass** in Schritt (b) ein auf dem Ventil (30) vorgesehenes Pressteil (33) die untere Lippe (23) durch Ausüben von Druck auf die untere Fläche (122) zusammendrückt.

5. Verfahren zur Montage einer Dichtung (20) zur Abdichtung einer Thermobetätigungsvorrichtung (10) nach Anspruch 2, **dadurch gekennzeichnet, dass** in Schritt (b) ein an dem Ventil (30) vorgesehenes Greifteil (34) das Kontaktgelenk (22) durch Ausüben von Druck auf das Verbindungsteil (123) zusammendrückt.

6. Verfahren zur Montage einer Dichtung (20) zur Abdichtung einer Thermobetätigungsvorrichtung (10) nach Anspruch 2, **dadurch gekennzeichnet, dass** in Schritt (b) ein an dem Ventil (30) vorgesehenes Anschlagteil (35) eine an der oberen Lippe (21) vorgesehene Anschlagfläche (211) durch Ausüben von Druck auf die Seitenfläche (121) zusammendrückt.

## Revendications

1. Un thermo-actionneur (10) destiné à être utilisé pour contrôler le flux de l'agent de refroidissement à travers au moins un siège de soupape dans un boîtier de thermostat placé dans des circuits de circulation de refroidissement de moteurs à combustion interne et comprenant
- un corps cylindrique (11) qui comprend une structure à diamètre échelonné (12) incorporée sous forme de saillie dans le prolongement du corps cylindrique mentionné (11), dans laquelle la structure à diamètre échelonné mentionnée (12) consiste en une surface latérale (121), une surface inférieure (122) et une partie de connexion (123) qui connecte la surface latérale (121) mentionnée et la surface inférieure (122) à un tournant,
- une soupape (30) qui est sous forme circulaire et fixée sur ledit corps cylindrique (11) d'une manière ceignant au moins partiellement le corps (11),
- un joint annulaire (20) qui est positionné entre la soupape mentionnée (30) et ledit diamètre échelonné (12) comme fournissant le scellement, **caractérisé en ce que**
le joint annulaire mentionné (20) comprend
- une lèvre inférieure (23) arrêtée sur la surface inférieure mentionnée (122),
- une lèvre supérieure (21) s'étendant sur toute la surface latérale mentionnée (121),
- une charnière de contact (22) s'étendant entre la lèvre inférieure mentionnée (23) et la lèvre supérieure (21) en ceignant la surface extérieure de la partie de connexion mentionnée (123),
et dans lequel ledit joint annulaire (20) a une forme échelonné tel un étage appropriée à la forme de la structure à diamètre échelonné (12) entre ladite lèvre supérieure (21) et la lèvre inférieure (23) grâce au fait que le diamètre de la lèvre supérieure (21) est supérieure au diamètre de la lèvre inférieure (23),
et en plus ladite soupape (30) a une forme échelonné tel un étage appropriée à la forme du joint annulaire (20) et comprend
- une partie porteur (31) qui est fixée sur le corps cylindrique (11) d'une manière frettée d'une manière resserrée, s'étend vers le bas en ceignant le corps (11) dans le sens longitudinal et a une surface de contact (32) positionné d'une manière ceignant au moins partiellement le corps (11),
- une partie de presse (33) qui compresse une surface de siège (231), pourvu sur la lèvre inférieure (23) au moyen d'exercer pression vers ladite surface inférieure (122) ,
- une partie de préhension (34) qui compresse la charnière de contact (22) au moyen d'exercer pression vers la partie de connexion mentionnée (123),
- une partie d'arrêt (35) qui compresse la lèvre supérieure (21) au moyen d'exercer pression vers ladite surface latérale (121),
et dans laquelle la soupape (30) écrase le joint annulaire (20) entre la soupape (30) et ledit diamètre échelonné (12) pour améliorer le scellement entre eux.

2. Procédé d'assemblage du joint (20) pour fournir le scellement à un thermo-actionneur (10) selon la Revendication 1, **caractérisé en ce qu'**il comprend les étapes suivantes
(a) Placer le joint (20) sur le corps (10) de sorte qu'une lèvre inférieure (23) pourvue sur le joint (20) soit arrêtée sur une surface inférieure (122) du diamètre échelonné (12) ; une lèvre supérieure (21) pourvu sur le joint (20) s'étende vers une surface latérale (121) du diamètre échelonné (12) ; et une charnière de contact (22), s'étendant entre la lèvre inférieure (23) et la lèvre supérieure (21), soit arrêté sur une partie de connexion (123),
(b) Fixer d'une soupape (30) d'une manière frettée sur le corps (11) d'une manière écrasante et compresser le joint (20) entre la soupape (30) et le diamètre échelonné (12).

3. Un procédé d'assemblage du joint (20) pour fournir le scellement à un thermo-actionneur (10) selon la Revendication 2, **caractérisé en ce que,** à l'étape (b), ladite soupape (30) est fixée d'une manière frettée d'une manière ceignant au moins partiellement le corps (11) à travers une surface de contact (32) incorporée sur ladite soupape (30).

4. Un procédé d'assemblage du joint (20) pour fournir le scellement à un thermo-actionneur (10) selon la Revendication 2, **caractérisé en ce que,** à l'étape (b), une partie de presse (33) pourvu sur ladite soupape (30) compresse la lèvre inférieure (23) au moyen d'exercer pression vers la surface inférieure (122).

5. Un procédé d'assemblage du joint (20) pour fournir le scellement à un thermo-actionneur (10) selon la Revendication 2, **caractérisé en ce que,** à l'étape (b), une partie de préhension (34) prévue sur ladite soupape (30) compresse la charnière de contact (22) au moyen d'exercer pression vers la partie de connexion (123).

6. Un procédé d'assemblage du joint (20) pour fournir le scellement à un thermo-actionneur (10) selon la Revendication 2, **caractérisé en ce que,** à l'étape (b), une partie d'arrêt (35) prévue sur ladite soupape (30) compresse une surface d'arrêt (211), pourvue sur la lèvre supérieure (21), au moyen d'exercer pression vers la surface latérale (121).
